# EUROPÄISCHE PATENTANMELDUNG

(11) **EP 1 810 637 A1**
(43) Veröffentlichungstag der Anmeldung: **25.07.2007**
(21) Anmeldenummer: 07000509.5
(22) Anmeldetag: 11.01.2007
(51) Int. Cl.: A61C 3/02

(54) **Dentalfräser**

(30) Priorität: 19.01.2006 DE 102006002722
(71) Anmelder: Gebr. Brasseler GmbH & Co. KG, D-32657 Lemgo (DE)
(72) Erfinder: Meier, Friedrich Wilhelm, 32825 Blomberg (DE); Hecke, Josef, 32694 Dörentrup (DE)
(74) Vertreter: Weber, Joachim

(57) **Zusammenfassung**

Die Erfindung bezieht sich auf einen Dentalfräser mit einem an einem Schaft befestigten Fräskopf 1, welcher mit mehreren Schneiden 2 versehen ist, wobei der Fräskopf 1 zwei Querhiebe 3, 4 umfasst, welche jeweils wendelförmig an dem Fräskopf 1 ausgebildet sind, wobei die beiden Querhiebe 3, 4 mit einander entgegengerichtetem Drall verlaufen.

## Beschreibung

Die Erfindung bezieht sich auf einen Dentalfräser gemäß dem Oberbegriff des Hauptanspruchs.

Im Einzelnen bezieht sich die Erfindung auf einen Dentalfräser, welcher beispielsweise bei schwer zerspanbaren Metalllegierungen, wie Kobalt-Chrom-Legierungen, einsetzbar ist, beispielsweise für die Fertigung von Kronen, Brücken und/oder Teilprothesen.

Die bisher bekannten Fräser weisen unterschiedliche Verzahnungsarten auf. Unter dem Begriff Verzahnung ist im Zusammenhang mit dieser Anmeldung die Anordnung und Ausbildung der einzelnen Schneiden zu verstehen. Der Fräskopf des Dentalfräsers umfasst somit eine Vielzahl von Schneiden. Diese können gemäß dem Stand der Technik auch mit einem Querhieb versehen sein, welcher die Schneide durch einen Einschnitt unterbricht. Hierdurch ergeben sich bei der Zerspanung langspanende Werkstoffe kleinere Späne.

Der Erfindung liegt die Aufgabe zugrunde, einen Dentalfräser der eingangs genannten Art zu schaffen, welcher bei einfachem Aufbau und einfacher, kostengünstiger Herstellbarkeit eine hohe Abtragsleistung aufweist.

Erfindungsgemäß wird die Aufgabe durch die Merkmalskombination des Hauptanspruchs gelöst. Die Unteransprüche zeigen weitere vorteilhafte Ausgestaltungen der Erfindung.

Erfindungsgemäß ist somit vorgesehen, dass der Dentalfräser zwei Querhiebe umfasst, die sich jeweils wendelartig an dem Fräskopf erstrecken, wobei die beiden Querhiebe mit einander entgegengerichtetem Drall verlaufen. Somit unterscheidet sich die Wendelrichtung bzw. der Drall der beiden Querhiebe voneinander. Einer der beiden Querhiebe verläuft somit rechtsdrehend, während der andere Querhieb linksdrehend ausgebildet ist.

Durch die erfindungsgemäße Ausgestaltung ergeben sich Schneidensegmente unterschiedlicher Breite, da die einzelnen Schneiden durch die Querhiebe in unterschiedlich lange Schneidenbereiche unterteilt werden. Durch diese Ausgestaltung ergibt sich eine verbesserte Abtragleistung, da beim Zerspanen eines Materials Späne unterschiedlicher Größe erzeugt werden.

Zusätzlich zu der erhöhten Abtragsleistung weist der Dentalfräser auch eine erhöhte Standzeit auf.

In einer besonders günstigen Weiterbildung der Erfindung ist vorgesehen, dass die beiden Querhiebe wendelartig, d. h. mit gleichbleibender Steigung, längs des Fräskopfes verlaufen. Hierdurch ergibt sich über die gesamte Länge des Fräskopfes eine gleichbleibende Anordnung unterschiedlicher Längen von Schneidenbereichen.

Die beiden Querhiebe können erfindungsgemäß entweder mit gleicher Steigung oder mit zueinander unterschiedlicher Steigung ausgebildet sein. Hierdurch lassen sich Schneidengeometrien erzeugen, die für bestimmte Werkstoffe optimiert werden können.

Erfindungsgemäß kann es weiterhin vorteilhaft sein, wenn jeweils ein wendelartiger Querhieb vorgesehen ist. Das bedeutet, dass ein rechtsdrehender und ein linksdrehender Querhieb an dem Fräskopf ausgebildet sind. Als Alternative hierzu ist es auch möglich, mehrere zueinander parallele Querhiebe vorzusehen, so dass beispielsweise zwei Querhiebe parallel zueinander verlaufend rechtsdrehend ausgebildet sind, während zwei weitere Querhiebe parallel zueinander verlaufend linksdrehend ausgebildet sind. Es versteht sich, dass auch eine größere Anzahl an zueinander parallelen Querhieben vorgesehen sein können.

Bei dem erfindungsgemäßen Fräskopf ist es möglich, die Schneiden gerade zu verzahnen oder diese mit einem Rechtsdrall oder einem Linksdrall zu versehen.

Hinsichtlich der Ausgestaltung des Fräskopfes ist die Erfindung nicht auf bestimmte Formen beschränkt. Vielmehr ist es beispielsweise möglich, den Fräskopf konisch oder ballig auszubilden.

Im Folgenden wird die Erfindung anhand eines Ausführungsbeispiels in Verbindung mit der Zeichnung beschrieben. Dabei zeigt:

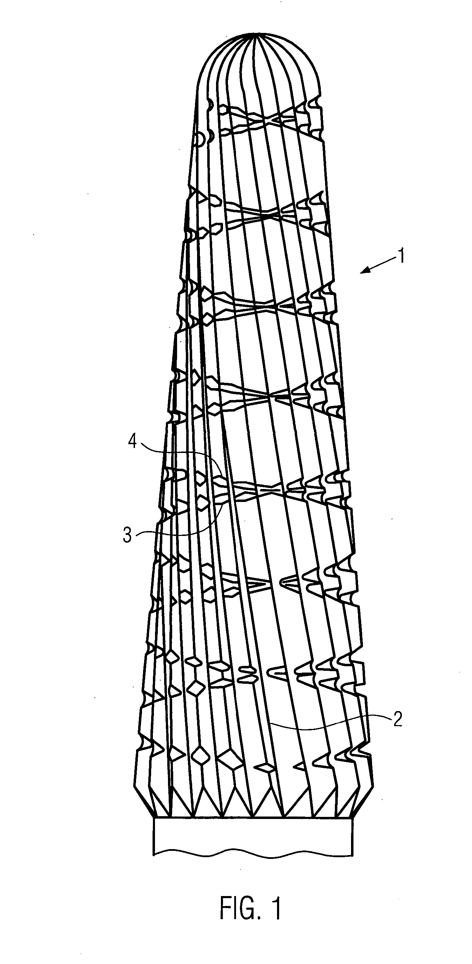

Fig. 1 eine Darstellung eines erfindungsgemäß ausgebildeten Fräskopfes.

Die Fig. 1 zeigt einen Fräskopf 1, welcher mit einer Vielzahl von zueinander parallelen Schneiden 2 versehen ist. Der Fräskopf ist im Wesentlichen konisch ausgebildet. Zusätzlich zu den Schneiden 2 weist der Fräskopf einen ersten Querhieb 3 und einen zweiten Querhieb 4 auf, welche sich wendelartig um den Fräskopf erstrecken. Die Querhiebe sind mit einer gegenläufigen, einander entgegengerichteten Wendelrichtung oder mit einem entgegengerichteten Drall ausgebildet. Aus der Fig. 1 ist ersichtlich, dass die Schneiden 2 jeweils in unterschiedlich lange Schneidenbereiche unterteilt werden. Bei einer Drehung des Fräskopfes ergeben sich somit in ständiger Abfolge unterschiedliche, jeweils im Eingriff befindliche Schneidenlängen, die jeweils eine unterschiedliche Spanbreite bzw. Spanlänge erzeugen. Hierdurch erhöht sich das Spanverhalten erheblich.

## Patentansprüche

1. Dentalfräser mit einem an einem Schaft befestigten Fräskopf (1), welcher mit mehreren Schneiden (2) versehen ist, wobei der Fräskopf (1) zwei Querhiebe (3, 4) umfasst, welche jeweils wendelförmig an dem Fräskopf (1) ausgebildet sind, wobei die beiden Querhiebe (3, 4) mit einander entgegengerichtetem Drall verlaufen.

2. Dentalfräser nach Anspruch 1, **dadurch gekennzeichnet, dass** die beiden Querhiebe (3, 4) wendelartig verlaufen.

3. Dentalfräser nach Anspruch 1 oder 2, **dadurch gekennzeichnet, dass** die beiden Querhiebe (3, 4) mit jeweils gleicher Steigung ausgebildet sind.

4. Dentalfräser nach Anspruch 1 oder 2, **dadurch gekennzeichnet, dass** die beiden Querhiebe (3, 4) mit zueinander unterschiedlicher Steigung ausgebildet sind.

5. Dentalfräser nach einem der Ansprüche 1 bis 4, **dadurch gekennzeichnet, dass** jeweils ein wendelartiger Querhieb (3, 4) vorgesehen ist.

6. Dentalfräser nach einem der Ansprüche 1 bis 4, **dadurch gekennzeichnet, dass** jeweils mehrere, zueinander parallele Querhiebe (3, 4) ausgebildet sind.

7. Dentalfräser nach einem der Ansprüche 1 bis 6, **dadurch gekennzeichnet, dass** die Schneiden (2) gerade verzahnt sind.

8. Dentalfräser nach einem der Ansprüche 1 bis 6, **dadurch gekennzeichnet, dass** die Schneiden (2) mit einem Rechtsdrall verzahnt sind.

9. Dentalfräser nach einem der Ansprüche 1 bis 6, **dadurch gekennzeichnet, dass** die Schneiden (2) mit einem Linksdrall verzahnt sind.

10. Dentalfräser nach einem der Ansprüche 1 bis 9, **dadurch gekennzeichnet, dass** der Fräskopf (1) konisch ausgebildet ist.

11. Dentalfräser nach einem der Ansprüche 1 bis 9, **dadurch gekennzeichnet, dass** der Fräskopf (1) ballig ausgebildet ist.

12. Dentalfräser nach einem der Ansprüche 1 bis 9, **dadurch gekennzeichnet, dass** der Fräskopf (1) zylindrisch ausgebildet ist.
